(19) **Europäisches Patentamt**
**European Patent Office**
**Office européen des brevets**

(11) **EP 1 741 193 B1**

(12) **EUROPEAN PATENT SPECIFICATION**

(45) Date of publication and mention
of the grant of the patent:
**26.09.2018 Bulletin 2018/39**

(51) Int Cl.:
*H04M 11/06* (2006.01)   *H04B 1/38* (2015.01)
*H04L 27/26* (2006.01)

(21) Application number: **05729397.9**

(22) Date of filing: **24.03.2005**

(86) International application number:
**PCT/US2005/009802**

(87) International publication number:
**WO 2005/094511 (13.10.2005 Gazette 2005/41)**

(54) **MINIMIZING THE DIFFERENTIAL DELAY IN ADSL2 AND ADSL2+ TO SUPPORT BONDING**

MINIMIERUNG DER DIFFERENZVERZÖGERUNG BEI ADSL2 UND ADSL2+ ZUR
UNTERSTÜTZUNG VON BONDING

PROCEDE PERMETTANT DE MINIMISER LE RETARD DIFFERENTIEL POUR ADSL2 ET ADSL2+
EN VUE DE MAINTENIR LA LIAISON

(84) Designated Contracting States:
**DE FR GB**

(30) Priority: **25.03.2004 US 556269 P**

(43) Date of publication of application:
**10.01.2007 Bulletin 2007/02**

(73) Proprietor: **Telogy Networks Inc.**
**Germantown, MD 20874 (US)**

(72) Inventor: **MODLIN, Cory, S.**
**Chevy Chase, MD 20815 (US)**

(74) Representative: **Zeller, Andreas et al**
**Texas Instruments Deutschland GmbH**
**Haggertystraße 1**
**85356 Freising (DE)**

(56) References cited:
**US-A1- 2002 140 991     US-A1- 2004 028 084**
**US-A1- 2004 032 351**

- **CORY S MODLIN TEXAS INSTRUMENTS INC
  USA: "G.992.3/G992.5: Proposed Appendix to
  Describe Constraints on the Minimum Delay; D
  1059", ITU-T DRAFT STUDY PERIOD 2001-2004,
  INTERNATIONAL TELECOMMUNICATION
  UNION, GENEVA ; CH, vol. STUDY GROUP 15, 19
  April 2004 (2004-04-19), pages 1-11,
  XP017417792,**
- **FRANK VAN DER PUTTEN ALCATEL BELL
  BELGIUM: "ADSL: Proposed Appendix to
  Describe Constraints on the Minimum Delay; TD
  30", ITU-T DRAFT STUDY PERIOD 2001-2004,
  INTERNATIONAL TELECOMMUNICATION
  UNION, GENEVA ; CH, vol. STUDY GROUP 15, 19
  April 2004 (2004-04-19), pages 1-5, XP017428477,**
- **DANNY VAN BRUYSSEL ALCATEL BELL DE
  VILLERMONTSTRAAT ET AL: "ADSL:
  Introduction of Impulse Noise Protection
  Requirement; D 654", ITU-T DRAFT STUDY
  PERIOD 2001-2004, INTERNATIONAL
  TELECOMMUNICATION UNION, GENEVA ; CH,
  vol. STUDY GROUP 15, 20 January 2003
  (2003-01-20), pages 1-5, XP017417385,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention is generally related to multiple transceivers forming a bonding group in Asymmetric Digital Subscriber Line, versions 2 and 2+, i.e., ADSL2 and ADSL2+, respectively, where the differential delay among bonded members of the group is controlled through a minimum delay parameter, derived from International Telecommunications Union (ITU) G.994.1. Construction of a valid set of configuration parameters involves the interdependence of the minimum delay, a minimum impulse noise protection, a minimum overhead message rate, a minimum net data rate, and the data rate granularity.

BACKGROUND OF THE INVENTION

The net data rate, impulse noise protection (INP), interleaver delay, and overhead rates are all interdependent variables in ITU Recommendations G.992.3 and G.992.5 for ADSL2 and ADSL2+, respectively. Limits on the minimum and maximum net data rate, the minimum INP, the maximum delay, and the minimum overhead rate can be set in ADSL2 and ADSL2+, through the Management Information Base (MIB) defined by ITU Recommendation G.997.1. Previous recognition of the relationship among these parameters is evident in other contributions. In ITU document SS-063, it was noted that certain values of data rates and overhead rates can not be supported simultaneously. Similarly, in ITU document MC-082, limits on INP, data rates, and the maximum delay are described.

The interdependence of data rate, INP, delay, and overhead rate can be seen in the expressions for each of these variables. ADSL2 defines the framing parameters: $K_p$, the number of octets in a mux data frame, $M_p$; Reed-Solomon codeword, $T_p$, which is defined by noting that an overhead octet is inserted into every $T_p{}^{th}$ mux data frame; $I_p$, the number of coded bits in a Discrete Multi-Tone (DMT) symbol; and $K_p$, the interleaver depth. ADSL2 also defines derived parameters $N_{FEC,p} = M_p*K_p+R_p$, i.e., the Reed-Solomon codeword size, and $S_p = 8*N_{FEC,p}/L_p$, i.e., the number of DMT symbols per Reed-Solomon codeword.

In ADSL2, the net data rate is given by

$$\text{net data rate} = M_p * K_p/S_p * 32 - \text{overhead rate} \quad \text{kbps} \tag{1}$$

where the overhead rate is

$$OR_p = M_p/(S_p * T_p) * 32 \quad \text{kbps.} \tag{2}$$

The period of the overhead channel is

$$PER_p = T_p * S_p * SEQ_p /(4 * M_p)$$

$$= SEQ_p * 8/OR_p. \tag{3}$$

The impulse noise protection is given by

$$\text{INP} = 8 * D_p * t_p/L_p \quad \text{DMT symbols,} \tag{4}$$

where $t_p$ is the correction capability of the Reed-Solomon code, normally equal to $R_p/2$. Finally, the interleaver delay is

$$\text{delay} = \frac{\text{ceil}(S_p * D_p)}{4} \quad \text{ms} \tag{5}$$

There are additional constraints in ADSL2, such as $M_p$ is a power of two between 1 and *16*, $M_p/S_p$ must be less than or equal to two, or alternatively in ADSL2+, three, $D_p$ is a power of two between 1 and 64 downstream or 1 and 8 upstream, $S_p \geq \frac{1}{2}$ (1/3 ADSL2+), the overhead rate must be less than 64 kbps, delay $\geq$ 1 ms, where setting the delay equal to 1 ms has a special interpretation in recommendation G.997.1 meaning that $S_p \leq 1$ and $D_p = 1$, and the period of the overhead channel must be between 15 ms and 20 ms.

In some cases it is somewhat obvious that certain combinations of parameter settings are invalid while in other cases it is not obvious. For example, it is clear that you can not specify a maximum delay of 1 ms and expect to achieve an impulse noise protection of 16 DMT symbols. But it is not as obvious that you can set the limits on the interleaver delay to between 13 and 15 ms and be unable to achieve an overhead rate of greater than 39 kbps, as described in ITU document MC-063.

When bonding, the differential delay among bonded transceivers translates directly into implementation complexity. With differential delay, the receiver needs to buffer possibly multiple packets over a low delay link while waiting for a packet over a high delay link to arrive. The amount of buffering is directly proportional to the difference in delay, times the data rate. For example, even a 1 ms delay difference at a data rate of 10 Mbps results in a need to buffer approximately 1250 bytes. Therefore, it is desirable to keep the differential delay as small as possible.

One relatively simple way to achieve the minimum possible differential delay and to guarantee that any overhead rate can be met is to set the delay_max = delay_min = 1, 2, 4, 8, 16, or 32 ms. Because the interleaver depth is always a power of two, from the expression for interleaver delay, that is, equation (5) above, we see that limiting $S_p$ to a power of two will satisfy the delay restriction. In this case, in equation (2), we see that this permits an overhead rate of up to exactly 64 kbps, the maximum allowed. This restriction is similar to ADSL1 framing and allows net data rates up to about 16 Mbps.

For an overhead rate of 64 kbps, the maximum message overhead rate is 60.8 kbps in the worst case. To this, from equation (3), we calculate $SEQ_p$ assuming the period is at its smallest allowed value of 15 ms. In this case, $SEQ_p$ = 120. In the case where the Cyclic Redundancy Check (CRC), indicator bits, and overhead messages are all carried in the same latency path, that is, where $p$ is the lowest latency path, six of the 120 bytes are reserved for the CRC, etc. and are not used for the overhead messages. Therefore, the overhead message rate is 114/120*64 = 60.8 kbps. Similar calculations can be done for other overhead rates.

In ADSL2+, if the maximum rate for any of the bonded pairs is over 16 Mbps, we can use the same technique and set delay_min = delay_max = 1.33, 2.67, or 5.33 ms, which limits $S_p$ to 2"/3 for $n$=0, 1, 2, 3, ...7. We mention that values of $S_p$ higher than 1/3 are allowed since not all bonded pairs need to have $S_p$ = 1/3. However, note that setting the delay to 10.667 ms is not allowed when $S_p$ = 1/3, since this would require $D_p > 64$. If you want to set the delay higher than 5.33 ms, you can select a delay that is a power of two. Setting the delay to and of these three values means that the overhead rate can not exceed 48 kbps, as in equation (2) with $M_p$ =1, $T_p$ - 2 and $S_p$ = 1/3. Hence, from equation (3), $SEQ_p$ = 90, when $PER_p$ = 15 ms, yielding a worst case message overhead rate of 84/90*48 = 44.8 kbps.

Setting delay_max = delay_min and restricting it to a power of two, also restricts the data rate granularity. As we see from the formula for the net data rate, the data rate granularity is a multiple of 64 kbps, 32 kbps, 16 kbps, or 8 kbps for $M_p/S_p$ = 2, 1, ½ , and ¼, respectively. The selection of $M_p/S_p$ is made based on the requirements of the overhead channel rate. If an overhead channel rate of 32 kbps is required, for example, $M_p/S_p$ can not be less than 1 and the data rate granularity is 32 kbps.

There remains a need to define the minimum delay to facilitate bonding in ADSL2 and ADSL2+, since differential delay among bonded transceivers means that more memory for buffering is required at the receiver. However, constraints need to be placed on the maximum and minimum delays in order to meet other constraints in ADSL2 and ADSL2+, such as the overhead rate, the minimum and maximum data rates, and the impulse noise protection (INP).

SUMMARY OF THE INVENTION

The present invention is defined by independent claims 1, 2, 3, 4 and 5.

An aspect of the an exemplary embodiment of the present invention provides a method of configuring an ADSL transceiver to operate according to parameters selected for an Asymmetric Digital Subscriber Line, version 2 (ADSL2) compliant system. The method includes selecting a delay of one of 1, 2, 4, 8, 16, and 32 ms, in which selecting delay = 1 ms in the ADSL2 compliant system having a selected minimum noise protection (*INP_min*) = 0 Discrete Multi-tone (DMT) symbols produces a maximum downstream net data rate of 14656 kbps, in which selecting delay =2 ms in the ADSL2 compliant system having selected one of *INP_min* = 0, ½, 1 and 2 DMT symbols produces maximum downstream net data rates of 14656, 7104, 3008, and 960, respectively, in which a delay = 4 ms in the ADSL2 compliant system having one of *INP_min* = 0, ½, 1, 2, and 4 DMT symbols provides maximum downstream net data rates of 14656, 13632, 7104, 3008, and 960 kbps, respectively, in which a delay = 8 ms in the ADSL2 compliant system having one of *INP_min* = 0, ½, 1, 2, 4 and 8 DMT symbols provides maximum downstream net data rates of 14656, 13632, 13632, 7104, 3008, and 960 kbps, respectively, in which a delay = 16 ms in the ADSL2 compliant system having one of *INP_min* = 0, ½, 1, 2, 4, 8 and 16 DMT symbols provides maximum downstream net data rates of 8064, 7552, 7552, 7552, 3502, 1472, and 448 kbps, respectively, and in which a delay = 32 ms in the ADSL2 compliant system having one of *INP_min* = 0, ½, 1, 2, 4, 8 and 16 DMT symbols provides maximum downstream net data rates of 3968, 3712, 3712, 3712, 3712, 1728, and 704 kbps, respectively, setting the minimum delay equal to the maximum delay whereby the differential delay is set to zero, and selecting a minimum net data rate for downstream to be less than a particular maximum downstream net data rate that corresponds to a selected delay and a selected one of *INP-min* values.

Another aspect of the an exemplary embodiment of the present invention provides a method of configuring an ADSL transceiver to operate according to parameters selected for an Asymmetric Digital Subscriber Line, version 2 (ADSL2) compliant system. The method includes selecting a delay of one of 1, 2, 4, 8, 16, and 32 ms, in which selecting delay = 1 ms in the ADSL2 compliant system having a selected minimum noise protection (*INP_min*) = 0 Discrete Multi-tone (DMT) symbols produces a maximum upstream net data rate of 3520 kbps, in which selecting delay =2 ms in the ADSL2 compliant system having selected one of *INP_min* = 0, ½, 1 and 2 DMT symbols produces maximum upstream net data rates of 3520, 3072, 1472, and 448, respectively, in which a delay = 4 ms in the ADSL2 compliant system having one of *INP_min* = 0, ½, 1, 2, and 4 DMT symbols provides maximum upstream net data rates of 3520, 3264, 1728, 704, and 192 kbps, respectively, in which a delay = 8 ms in the ADSL2 compliant system having one of *INP_min* = 0, ½, 1, 2, 4 and 8 DMT symbols provides maximum upstream net data rates of 1920, 1856, 1792, 832, 320, and 64 kbps, respectively, in which a delay = 16 ms in the ADSL2 compliant system having one of *INP_min* = 0, ½, 1, 2, 4, 8 and 16 DMT symbols provides maximum upstream net data rates of 896, 896, 896, 832, 384, and 128 kbps, respectively, and in which a delay = 32 ms in the ADSL2 compliant system having one of *INP_min* = 0, ½, 1, 2, 4, 8 and 16 DMT symbols provides maximum upstream net data rates of 416, 416, 416, 416, 384, 160, and 32 kbps, respectively, setting the minimum delay equal to the maximum delay whereby the differential delay is set to zero, and selecting a minimum net data rate for downstream to be less than a particular maximum upstream net data rate that corresponds to a selected delay and a selected one of *INP-min* values.

Yet another aspect of the an exemplary embodiment of the present invention provides a method of configuring an ADSL transceiver to operate according to parameters selected for an Asymmetric Digital Subscriber Line, version 2+ (ADSL2+) compliant system. The method includes selecting a delay of one of 1, 2, 4, 8, 16, and 32 ms, in which selecting delay = 1 ms in the ADSL2+ compliant system having a selected minimum noise protection (*INP_min*) = 0 Discrete Multi-tone (DMT) symbols produces a maximum downstream net data rate of 24416 kbps, in which selecting delay =2 ms in the ADSL2+ compliant system having selected one of *INP_min* = 0, ½, 1 and 2 DMT symbols produces maximum downstream net data rates of 16256, 7104, 3008, and 960, respectively, in which a delay = 4 ms in the ADSL2+ compliant system having one of *INP_min* = 0, ½, 1, 2, 4, and 8 DMT symbols provides maximum downstream net data rates of 16256, 15232, 7104, 3008, 960, and 416 kbps, respectively, in which a delay = 8 ms in the ADSL2 compliant system having one of *INP_min* = 0, ½, 1, 2, 4 and 8 DMT symbols provides maximum downstream net data rates of 16256, 15744, 15232, 7104, 3008, and 960 kbps, respectively, in which a delay = 16 ms in the ADSL2 compliant system having one of *INP_min* = 0, ½, 1, 2, 4, 8 and 16 DMT symbols provides maximum downstream net data rates of 8064, 7936, 7808, 7552, 3520, 1472, and 448 kbps, respectively, and in which a delay = 32 ms in the ADSL2 compliant system having one of *INP_min* = 0, ½, 1, 2, 4, 8 and 16 DMT symbols provides maximum downstream net data rates of 3968, 3968, 3904, 3840, 3712, 1728, and 704 kbps, respectively, setting the minimum delay equal to the maximum delay whereby the differential delay is set to zero, and selecting a minimum net data rate for downstream to be less than a particular maximum downstream net data rate that corresponds to a selected delay and a selected one of *INP-min* values.

Yet another aspect of the an exemplary embodiment of the present invention provides a method of configuring an ADSL transceiver to operate according to parameters selected for an Asymmetric Digital Subscriber Line, version 2+ (ADSL2+) compliant system. The method includes selecting a delay of one of 1.33, 2.67, and 5.33 ms, in which selecting delay = 1.33 ms in the ADSL2+ compliant system having selected minimum noise protection (*INP_min*) = 0, ½, 1, and 2 Discrete Multi-tone (DMT) symbols produces maximum downstream net data rates of 24416, 6560, 2432, and 416, respectively, in which selecting delay =2,67 ms in the ADSL2+ compliant system having selected one of *INP_min* = 0, ½, 1,2 and 4 DMT symbols produces maximum downstream net data rates of 24416, 1470, 6560, 2432, and 416, respectively, in which a delay = 5.33 ms in the ADSL2+ compliant system having one of *INP_min* = 0, ½, 1, 2, 4, and 8 DMT symbols provides maximum downstream net data rates of 24416, 23264, 14720, 6560, 2432, and 416 kbps, respectively, setting the minimum delay equal to the maximum delay whereby the differential delay is set to zero, and selecting a minimum net data rate for downstream to be less than a particular maximum downstream net data rate that corresponds to a selected delay and a selected one of *INP-min* values.

Yet another aspect of the an exemplary embodiment of the present invention provides a method of configuring an ADSL transceiver to operate according to parameters selected for an Asymmetric Digital Subscriber Line, version 2+ (ADSL2+) compliant system. The method includes selecting a delay of one of 1, 2, 4, 8, 16, and 32 ms, in which selecting delay = 1 ms in the ADSL2+ compliant system having a selected minimum noise protection (*INP_min*) = 0 Discrete Multi-tone (DMT) symbols produces a maximum upstream net data rate of 3520 kbps, in which selecting delay =2 ms in the ADSL2+ compliant system having selected one of *INP_min* = 0, ½, 1 and 2 DMT symbols produces maximum upstream net data rates of 3520, 3072, 1472, and 448, respectively, in which a delay = 4 ms in the ADSL2+ compliant system having one of *INP_min* = 0, ½, 1, 2, and 4 DMT symbols provides maximum upstream net data rates of 3520, 3264, 1728, 704, and 192 kbps, respectively, in which a delay = 8 ms in the ADSL2+ compliant system having one of *INP_min* = 0, ½, 1, 2, 4 and 8 DMT symbols provides maximum upstream net data rates of 1920, 1856, 1792, 832, 320, and 64 kbps, respectively, in which a delay = 16 ms in the ADSL2 compliant system having one of *INP_min* = 0, ½, 1, 2, 4, 8 and 16 DMT symbols provides maximum upstream net data rates of 896, 896, 896, 832, 384, and 128 kbps, respectively, and in which a delay = 32 ms in the ADSL2 compliant system having one of *INP_min* = 0, ½, 1, 2, 4, 8 and 16 DMT symbols provides maximum upstream net data rates of 416, 416, 416, 416, 384, 160, and 32 kbps, respectively, setting the minimum delay equal to the maximum delay whereby the differential delay is set to zero, and selecting a minimum net data rate for downstream to be less than a particular maximum upstream net data rate that corresponds to a selected delay and a selected one of *INP-min* values.

DETAILED DESCRIPTION OF EXEMPLARY EMBODIMENTS OF THE INVENTION

Generally, an exemplary embodiment of the present invention using ADSL2 provides experimental results on how to constrain the maximum delay, i.e., *delay_max,* the minimum delay, i.e., *delay_min,* the minimum impulse noise protection, i.e., *INP_min,* the minimum overhead overhead message rate, i.e., *MSGmin,* the minimum net data rate, i.e., *net_min,* and the maximum data rate, i.e., *net_max,* to allow a valid configuration and successful transceiver training. Various exemplary embodiments of the present invention consider the case when multiple transceivers form a bonding group, where it may be important that differential delay among the bonded transceivers be minimized.

Failure to follow the experimental results of various exemplary embodiments of the present invention may lead to configuration errors, if not supported by the ADSL Transmission Unit-Central Office (ATU-C), and/or initialization failures with a so-called "configuration error" failure cause, if not supported by the ADSL Transmission Unit-Remote (ATU-R).

In various exemplary embodiments of the present invention, we may assume that the differential delay is set to zero and therefore, *delay_max = delay_min.* This assumption may ensure the minimum possible memory requirements, when bonding.

The experimental results for exemplary embodiments of the present invention using ADSL2 may be as follows:
• Set *delay_min = delay_max.* In either the upstream or downstream direction, all transceivers in a bonding group may use the same delay. The value for *delay_min = delay_max* may be selected from Tables VI.1 or VI.3, below.
• Set the minimum net data rate below the values shown in Tables VI.1 and VI.3 for downstream and upstream, respectively. Depending on the downstream PSD mask and value of BIMAX, the actual maximum net data rate may be lower than those shown in these tables.
• The valid range of *MSGmin* and the corresponding data rate granularity, i.e., (minimum value of *net_max - net_min*)*,* may be listed in Table VI.4, below.

**Table VI.1.** Maximum downstream net data rate (kbps) for various values of *delay_min = delay_max* and *INP_min.*

| | | INP_min | | | | | | |
|---|---|---|---|---|---|---|---|---|
| | | 0 | ½ | 1 | 2 | 4 | 8 | 16 |
| *delay_min* | i† | 14656 | 0 | 0 | 0 | 0 | 0 | 0 |
| *delay_max* | 2 | 14656 | 7104 | 3008 | 960 | 0 | 0 | 0 |
| (ms) | 4 | 14656 | 13632 | 7104 | 3008 | 960 | 0 | 0 |
| | 8 | 14656 | 14144 | 13663 | 7104 | 3008 | 960 | 0 |
| | 16 | 8064 | 7936 | 7808 | 7552 | 3520 | 1472 | 448 |
| | 32 | 3968 | 3968 | 3904 | 3840 | 3712 | 1728 | 704 |
| †In G.997.1 of the recommendation, a 1 ms delay is reserved to mean that $S_p \leq 1$ and $D_p = 1$. | | | | | | | | |

**Table VI.3.** Maximum upstream net data rate (kbps) for various values of *delay_min = delay_max* and *INP_min.*

| | | 0 | ½ | 1 | 2 | 4 | 8 | 16 | INP_min |
|---|---|---|---|---|---|---|---|---|---|
| | 1† | 3520 | 0 | 0 | 0 | 0 | 0 | 0 | |
| | 2 | 3520 | 3072 | 1472 | 448 | 0 | 0 | 0 | |
| | 4 | 3520 | 3264 | 1728 | 704 | 192 | 0 | 0 | |
| *delay_min* | 8 | 1920 | 1856 | 1792 | 832 | 320 | 64 | 0 | |

(continued)

| | | 0 | ½ | 1 | 2 | 4 | 8 | 16 | INP_min |
|---|---|---|---|---|---|---|---|---|---|
| delay_max | 16 | 896 | 896 | 896 | 832 | 384 | 128 | 0 | |
| (ms) | 32 | 416 | 416 | 416 | 416 | 384 | 160 | 32 | |

In G.997.1, a 1 ms delay is reserved to mean that $S_p \leq 1$ and $D_p = 1$.

**Table VI.4.** Range of *MSGmin* and minimum data rate granularity (*net_max = net_min*) when delay is selected from Tables VI.1 or VI.3.

| MSGmin (kbps) | data rate granularity (kbps) |
|---|---|
| 61-64 | not supported |
| 29-60 | 64 |
| 14-28 | 32 |
| 6-13 | 16 |
| 4-5 | 8 |

Generally, an exemplary embodiment of the present invention using ADSL2+ provides experimental results on how to constrain the maximum delay, i.e., *delay_max,* the minimum delay, i.e., *delay_min,* the minimum impulse noise protection, i.e., *INP_min,* the minimum overhead overhead message rate, i.e., *MSGmin,* the minimum net data rate, i.e., *net_min,* and the maximum data rate, i.e., *net_max,* to allow a valid configuration and successful transceiver training. Various exemplary embodiments of the present invention consider the case when multiple transceivers form a bonding group, where it may be important that differential delay among the bonded transceivers be minimized.

Failure to follow the experimental results of various exemplary embodiments of the present invention may lead to configuration errors, if not supported by the ATU-C, and/or initialization failures with a so-called "configuration error" failure cause, if not supported by the ATU-R.

In various exemplary embodiments of the present invention, we may assume that the differential delay is set to zero and therefore, *delay_max = delay_min.* This assumption may ensure the minimum possible memory requirements, when bonding.

The experimental results for exemplary embodiments of the present invention using ADSL2+ may be as follows:
• Set *delay_min = delay_max.* In either the upstream or downstream direction all transceivers in a bonding group may use the same delay. In the downstream direction, a value for delay can be selected from Table VI.1(+) or Table VI.2(+), below. When using delays from Table VI.2(+), since the internal representation of *delay_min* and *delay_max* are restricted to integers, *delay_min* may be set to floor(*delay_min*) and *delay_max* may be set to ceil(*delay_max*), where floor(·) and ceil(·) are the 'greatest integer less than' and 'smallest integer greater than', respectively. In the upstream direction, delay_min and delay_max may be selected from Table VI.3(+), below.
• Set the minimum net data rate below the values shown in Table VI.1(+) or VI.2(+) and VI.3(+) for downstream and upstream, respectively. Depending on the downstream PSD mask and value of BIMAX, the actual maximum net data rate may be lower than those shown in these tables.
• Depending on the delay, the valid range of *MSGmin* and the corresponding data rate granularity (minimum value of *net_max - net_min*) may be listed in Tables VI.4(+) and VI.5(+).

**Table VI.1(+).** Maximum downstream net data rate (kbps) for various values of *delay_min = delay_max* and *INP_min.*

| | | INP_min | | | | | | |
|---|---|---|---|---|---|---|---|---|
| | | 0 | ½ | 1 | 2 | 4 | 8 | 16 |
| | 1† | 24416 | 0 | 0 | 0 | 0 | 0 | 0 |
| dealy_min | 2 | 16256 | 7104 | 3008 | 960 | 0 | 0 | 0 |
| delay_max | 4 | 16256 | 15232 | 7104 | 3008 | 960 | 0 | 0 |
| (ms) | 8 | 16256 | 15744 | 15232 | 7104 | 3008 | 960 | 0 |
| | 16 | 8064 | 7936 | 7808 | 7552 | 3520 | 1472 | 448 |

(continued)

| INP_min | | | | | | | |
|---|---|---|---|---|---|---|---|
| | 0 | ½ | 1 | 2 | 4 | 8 | 16 |
| 32 | 3968 | 3968 | 3904 | 3840 | 3712 | 1728 | 704 |
| †In G.997.1 of the recommendation, a 1 ms delay is reserved to mean that $S_p \leq 1$ and $D_p = 1$. | | | | | | | |

**Table VI.2**(+). Maximum downstream net data rate (kbps) for various values of *delay_min* and *delay_max* and *INP_min*.

| | | INP_min | | | | | | |
|---|---|---|---|---|---|---|---|---|
| | | 0 | ½ | 1 | 2 | 4 | 8 | 16 |
| *delay_min* | 1.33† | 24416 | 6560 | 2432 | 416 | 0 | 0 | 0 |
| *delay_max* | 2.67 | 24416 | 14720 | 6560 | 2432 | 416 | 0 | 0 |
| (ms) | 5.33 | 24416 | 23264 | 14720 | 6560 | 2432 | 416 | 0 |
| †Set *delay_max* = ceil(*delay*) and *delay_min* = floor(*delay*). | | | | | | | | |

**Table VI.3(+).** Maximum upstream net data rate (kbps) for various values of *delay_min* = *delay_max* and *INP_min*.

| | | INP_min | | | | | | |
|---|---|---|---|---|---|---|---|---|
| | | 0 | ½ | 1 | 2 | 4 | 8 | 16 |
| *delay_min* | 1† | 3520 | 0 | 0 | 0 | 0 | 0 | 0 |
| *delay_max* | 2 | 3520 | 3072 | 1472 | 448 | 0 | 0 | 0 |
| (ms) | 4 | 3520 | 3264 | 1728 | 704 | 192 | 0 | 0 |
| | 8 | 1920 | 1856 | 1792 | 832 | 320 | 64 | 0 |
| | 16 | 896 | 896 | 896 | 832 | 384 | 128 | 0 |
| | 32 | 416 | 416 | 416 | 416 | 384 | 160 | 32 |
| †In G.997.1 of the recommendation, a 1 ms delay is reserved to mean that $S_p \leq 1$ and $D_p = 1$. | | | | | | | | |

**Table VI.4(+).** Range of *MSGmin* and minimum data rate granularity (*net_max* - *net_min*), when delay is selected from Tables VI.1(+) or VI.3(+).

| MSGmin (kbps) | data rate granularity (kbps) |
|---|---|
| 61-64 | not supported |
| 29-60 | 64 |
| 14-28 | 32 |
| 6-13 | 16 |
| 4-5 | 8 |

**Table VI.4**(+). Range of *MSGmin* and minimum data rate granularity (*net_max* - *net_min*), when delay is selected from Tables VI.1(+) or VI.3(+).

| MSGmin (kbps) | data rate granularity (kbps) |
|---|---|
| 45-64 | not supported |
| 21-44 | 48 |

(continued)

| MSGmin (kbps) | data rate granularity (kbps) |
|---|---|
| 9-20 | 24 |
| 4-8 | 12 |

Because many varying and different exemplary embodiments may be made with the scope of the inventive concepts taught herein, and because many modifications may be made in the exemplary embodiments detailed herein in accordance with the descriptive requirements of the law, it is to be understood that the detailed descriptions herein are to be interpreted as illustrative and not in the limiting sense.

**Claims**

1. A method of configuring an ADSL transceiver to operate according to parameters selected for an Asymmetric Digital Subscriber Line, version 2 -ADSL2-compliant system, the method comprising:

    selecting a delay of one of 1, 2, 4, 8, 16, and 32 ms;

        wherein selecting delay = 1 ms in the ADSL2 compliant system having a selected minimum noise protection - INP_min = 0 Discrete Multi-tone-DMT- symbols produces a maximum downstream net data rate of 14656 kbps,
        wherein selecting delay =2 ms in the ADSL2 compliant system having selected one of *INP_min* = 0, ½, 1 and 2 DMT symbols produces maximum downstream net data rates of 14656, 7104, 3008, and 960, respectively,
        wherein a delay = 4 ms in the ADSL2 compliant system having one of *INP_min* = 0, ½, 1, 2, and 4 DMT symbols provides maximum downstream net data rates of 14656, 13632, 7104, 3008, and 960 kbps, respectively,
        wherein a delay = 8 ms in the ADSL2 compliant system having one of *INP_min* = 0, ½, 1, 2, 4 and 8 DMT symbols provides maximum downstream net data rates of 14656, 13632, 13632, 7104, 3008, and 960 kbps, respectively,
        wherein a delay = 16 ms in the ADSL2 compliant system having one of *INP_min* = 0, ½, 1, 2, 4, 8 and 16 DMT symbols provides maximum downstream net data rates of 8064, 7552, 7552, 7552, 3502, 1472, and 448 kbps, respectively, and
        wherein a delay = 32 ms in the ADSL2 compliant system having one of *INP_min* = 0, ½, 1, 2, 4, 8 and 16 DMT symbols provides maximum downstream net data rates of 3968, 3712, 3712, 3712, 3712, 1728, and 704 kbps, respectively;

    setting the minimum delay equal to the maximum delay; and
    selecting a minimum net data rate for downstream to be less than a particular maximum downstream net data rate that corresponds to a selected delay and a selected one of *INP-min* values.

2. A method of configuring an ADSL transceiver to operate according to parameters selected for an Asymmetric Digital Subscriber Line, version 2 -ADSL2-compliant system, the method comprising:

    selecting a delay of one of 1, 2, 4, 8, 16, and 32 ms;

        wherein selecting delay = 1 ms in the ADSL2 compliant system having a selected minimum noise protection - INP_min = 0 Discrete Multi-tone-DMT- symbols produces a maximum upstream net data rate of 3520 kbps,
        wherein selecting delay =2 ms in the ADSL2 compliant system having selected one of *INP_min* = 0, ½, 1 and 2 DMT symbols produces maximum upstream net data rates of 3520, 3072, 1472, and 448, respectively,
        wherein a delay = 4 ms in the ADSL2 compliant system having one of *INP_min* = 0, ½, 1, 2, and 4 DMT symbols provides maximum upstream net data rates of 3520, 3264, 1728, 704, and 192 kbps, respectively,
        wherein a delay = 8 ms in the ADSL2 compliant system having one of *INP_min* = 0, ½, 1, 2, 4 and 8 DMT symbols provides maximum upstream net data rates of 1920, 1856, 1792, 832, 320, and 64 kbps, respectively,

wherein a delay = 16 ms in the ADSL2 compliant system having one of *INP_min* = 0, ½, 1, 2, 4, 8 and 16 DMT symbols provides maximum upstream net data rates of 896, 896, 896, 832, 384, and 128 kbps, respectively, and

wherein a delay = 32 ms in the ADSL2 compliant system having one of *INP_min* = 0, ½, 1, 2, 4, 8 and 16 DMT symbols provides maximum upstream net data rates of 416, 416, 416, 416, 384, 160, and 32 kbps, respectively;

setting the minimum delay equal to the maximum delay; and

selecting a minimum net data rate for downstream to be less than a particular maximum upstream net data rate that corresponds to a selected delay and a selected one of *INP-min* values.

3. A method of configuring an ADSL transceiver to operate according to parameters selected for an Asymmetric Digital Subscriber Line, version 2+ - ADSL2+-compliant system, the method comprising:

selecting a delay of one of 1, 2, 4, 8, 16, and 32 ms;

wherein selecting delay = 1 ms in the ADSL2+ compliant system having a selected minimum noise protection - INP_min = 0 Discrete Multi-tone - DMT - symbols produces a maximum downstream net data rate of 24416 kbps,

wherein selecting delay = 2 ms in the ADSL2+ compliant system having selected one of *INP_min* = 0, ½, 1 and 2 DMT symbols produces maximum downstream net data rates of 16256, 7104, 3008, and 960, respectively,

wherein a delay = 4 ms in the ADSL2+ compliant system having one of *INP_min* = 0, ½, 1, 2, 4, and 8 DMT symbols provides maximum downstream net data rates of 16256, 15232, 7104, 3008, 960, and 416 kbps, respectively,

wherein a delay = 8 ms in the ADSL2 compliant system having one of *INP_min* = 0, ½, 1, 2, 4 and 8 DMT symbols provides maximum downstream net data rates of 16256, 15744, 15232, 7104, 3008, and 960 kbps, respectively,

wherein a delay = 16 ms in the ADSL2 compliant system having one of *INP_min* = 0, ½, 1, 2, 4, 8 and 16 DMT symbols provides maximum downstream net data rates of 8064, 7936, 7808, 7552, 3520, 1472, and 448 kbps, respectively, and

wherein a delay = 32 ms in the ADSL2 compliant system having one of *INP_min* = 0, ½, 1, 2, 4, 8 and 16 DMT symbols provides maximum downstream net data rates of 3968, 3968, 3904, 3840, 3712, 1728, and 704 kbps, respectively;

setting the minimum delay equal to the maximum delay; and

selecting a minimum net data rate for downstream to be less than a particular maximum downstream net data rate that corresponds to a selected delay and a selected one of *INP-min* values.

4. A method of configuring an ADSL transceiver to operate according to parameters selected for an Asymmetric Digital Subscriber Line, version 2+ - ADSL2+-compliant system, the method comprising:

selecting a delay of one of 1.33, 2.67, and 5.33 ms;

wherein selecting delay = 1.33 ms in the ADSL2+ compliant system having selected minimum noise protection - INP_min = 0, ½, 1, and 2 Discrete Multi-tone -DMT-symbols produces maximum downstream net data rates of 24416, 6560, 2432, and 416 kbps, respectively,

wherein selecting delay = 2,67 ms in the ADSL2+ compliant system having selected one of *INP_min* = 0, ½, 1, 2 and 4 DMT symbols produces maximum downstream net data rates of 24416, 14720, 6560, 2432, and 416, respectively,

wherein a delay = 5.33 ms in the ADSL2+ compliant system having one of *INP_min* = 0, ½, 1, 2, 4, and 8 DMT symbols provides maximum downstream net data rates of 24416, 23264, 14720, 6560, 2432, and 416 kbps, respectively;

setting the minimum delay equal to the maximum delay; and

selecting a minimum net data rate for downstream to be less than a particular maximum downstream net data rate that corresponds to a selected delay and a selected one of *INP-min* values.

**5.** A method of configuring an ADSL transceiver to operate according to parameters selected for an Asymmetric Digital Subscriber Line, version 2+ -ADSL2+ - compliant system, the method comprising:

selecting a delay of one of 1, 2, 4, 8, 16, and 32 ms;

wherein selecting delay = 1 ms in the ADSL2+ compliant system having a selected minimum noise protection - INP-min = 0 Discrete Multi-tone - DMT - symbols produces a maximum upstream net data rate of 3520 kbps, wherein selecting delay =2 ms in the ADSL2+ compliant system having selected one of $INP\_min$ = 0, ½, 1 and 2 DMT symbols produces maximum upstream net data rates of 3520, 3072, 1472, and 448, respectively, wherein a delay = 4 ms in the ADSL2+ compliant system having one of $INP\_min$ = 0, ½, 1, 2, and 4 DMT symbols provides maximum upstream net data rates of 3520, 3264, 1728, 704, and 192 kbps, respectively, wherein a delay = 8 ms in the ADSL2+ compliant system having one of $INP\_min$ = 0, ½, 1, 2, 4 and 8 DMT symbols provides maximum upstream net data rates of 1920, 1856, 1792, 832, 320, and 64 kbps, respectively, wherein a delay = 16 ms in the ADSL2+ compliant system having one of $INP\_min$ = 0, ½, 1, 2, 4, 8 and 16 DMT symbols provides maximum upstream net data rates of 896, 896, 896, 832, 384, and 128 kbps, respectively, and wherein a delay = 32 ms in the ADSL2+ compliant system having one of $INP\_min$ = 0, ½, 1, 2, 4, 8 and 16 DMT symbols provides maximum upstream net data rates of 416, 416, 416, 416, 384, 160, and 32 kbps, respectively;

setting the minimum delay equal to the maximum delay; and
selecting a minimum net data rate for downstream to be less than a particular maximum upstream net data rate that corresponds to a selected delay and a selected one of $INP\text{-}min$ values.

**Patentansprüche**

**1.** Verfahren zum Konfigurieren eines ADSL-Transceivers zum Operieren gemäß für ein mit Asymmetrie Digital Subscriber Line Version 2 - ADSL2 - konformes System ausgewählten Parametern, das Verfahren umfassend:

Auswählen einer Verzögerung von einem von 1, 2, 4, 8, 16 und 32 ms;

wobei Auswählen einer Verzögerung = 1 ms in dem ADSL2-konformen System mit einem ausgewählten minimalen Rauschschutz - INP_min - = 0 diskreten Mehrton- bzw. DMT-Symbolen eine maximale Abwärtsrichtung-Nettodatenrate von 14656 kbps produziert, wobei Auswählen einer Verzögerung = 2 ms in dem ADSL2-konformen System mit einem ausgewählten einen von $INP\_min$ = 0, 1/2, 1 und 2 DMT-Symbolen maximale Abwärtsrichtung-Nettodatenraten von 14656, 7104, 3008 bzw. 960 produziert, wobei eine Verzögerung = 4 ms in dem ADSL2-konformen System mit einem von $INP\_min$ = 0, 1/2, 1, 2 und 4 DMT-Symbolen maximale Abwärtsrichtung-Nettodatenraten von 14656, 13632, 7104, 3008 bzw. 960 kbps bereitstellt, wobei eine Verzögerung = 8 ms in dem ADSL2-konformen System mit einem von $INP\_min$ = 0, 1/2, 1, 2, 4 und 8 DMT-Symbolen maximale Abwärtsrichtung-Nettodatenraten von 14656, 13632, 13632, 7104, 3008 bzw. 960 kbps bereitstellt, wobei eine Verzögerung = 16 ms in dem ADSL2-konformen System mit einem von $INP\_min$ = 0, 1/2, 1, 2, 4, 8 und 16 DMT-Symbolen maximale Abwärtsrichtung-Nettodatenraten von 8064, 7552, 7552, 7552, 3502, 1472 bzw. 448 kbps bereitstellt, und wobei eine Verzögerung = 32 ms in dem ADSL2-konformen System mit einem von $INP\_min$ = 0, 1/2, 1, 2, 4, 8 und 16 DMT-Symbolen maximale Abwärtsrichtung-Nettodatenraten von 3968, 3712, 3712, 3712, 3712, 1728 bzw. 704 kbps bereitstellt;

Einstellen der minimalen Verzögerung gleich der maximalen Verzögerung; und
Auswählen, dass eine minimale Nettodatenrate für Abwärtsrichtung kleiner ist als eine bestimmte maximale Abwärtsrichtung-Nettodatenrate, die mit einer ausgewählten Verzögerung und einem ausgewählten einen von $INP\_min$-Werten korrespondiert.

**2.** Verfahren zum Konfigurieren eines ADSL-Transceivers zum Operieren gemäß für ein mit Asymmetrie Digital Subscriber Line Version 2 - ADSL2 - konformes System ausgewählten Parametern, das Verfahren umfassend:

Auswählen einer Verzögerung von einem von 1, 2, 4, 8, 16 und 32 ms;

wobei Auswählen einer Verzögerung = 1 ms in dem ADSL2-konformen System mit einem ausgewählten minimalen Rauschschutz - INP_min - = 0 diskreten Mehrton- bzw. DMT-Symbolen eine maximale Aufwärtsrichtung-Nettodatenrate von 3520 kbps produziert,

wobei Auswählen einer Verzögerung = 2 ms in dem ADSL2-konformen System mit einem ausgewählten einen von *INP_min* = 0, 1/2, 1 und 2 DMT-Symbolen maximale Aufwärtsrichtung-Nettodatenraten von 3520, 3072, 1472 bzw. 448 produziert,

wobei eine Verzögerung = 4 ms in dem ADSL2-konformen System mit einem von *INP_min* = 0, 1/2, 1, 2 und 4 DMT-Symbolen maximale Aufwärtsrichtung-Nettodatenraten von 3520, 3264, 1728, 704 bzw. 192 kbps bereitstellt,

wobei eine Verzögerung = 8 ms in dem ADSL2-konformen System mit einem von *INP_min* = 0, 1/2, 1, 2, 4 und 8 DMT-Symbolen maximale Aufwärtsrichtung-Nettodatenraten von 1920, 1856, 1792, 832, 320 bzw. 64 kbps bereitstellt,

wobei eine Verzögerung = 16 ms in dem ADSL2-konformen System mit einem von *INP_min* = 0, 1/2, 1, 2, 4, 8 und 16 DMT-Symbolen maximale Aufwärtsrichtung-Nettodatenraten von 896, 896, 896, 832, 384 bzw. 128 kbps bereitstellt, und

wobei eine Verzögerung = 32 ms in dem ADSL2-konformen System mit einem von *INP_min* = 0, 1/2, 1, 2, 4, 8 und 16 DMT-Symbolen maximale Aufwärtsrichtung-Nettodatenraten von 416, 416, 416, 416, 384, 160 bzw. 32 kbps bereitstellt;

Einstellen der minimalen Verzögerung gleich der maximalen Verzögerung; und

Auswählen, dass eine minimale Nettodatenrate für Abwärtsrichtung kleiner ist als eine bestimmte maximale Aufwärtsrichtung-Nettodatenrate, die mit einer ausgewählten Verzögerung und einem ausgewählten einen von *INP_min*-Werten korrespondiert.

3. Verfahren zum Konfigurieren eines ADSL-Transceivers zum Operieren gemäß für ein mit Asymmetrie Digital Subscriber Line Version 2+ - ADSL2+ - konformes System ausgewählten Parametern, das Verfahren umfassend:

Auswählen einer Verzögerung von einem von 1, 2, 4, 8, 16 und 32 ms;

wobei Auswählen einer Verzögerung = 1 ms in dem ADSL2+-konformen System mit einem ausgewählten minimalen Rauschschutz - INP_min - = 0 diskreten Mehrton- bzw. DMT-Symbolen eine maximale Abwärtsrichtung-Nettodatenrate von 24416 kbps produziert,

wobei Auswählen einer Verzögerung = 2 ms in dem ADSL2+-konformen System mit einem ausgewählten einen von *INP_min* = 0, 1/2, 1 und 2 DMT-Symbolen maximale Abwärtsrichtung-Nettodatenraten von 16256, 7104, 3008 bzw. 960 produziert,

wobei eine Verzögerung = 4 ms in dem ADSL2+-konformen System mit einem von *INP_min* = 0, 1/2, 1, 2, 4 und 8 DMT-Symbolen maximale Abwärtsrichtung-Nettodatenraten von 16256, 15232, 7104, 3008, 960 bzw. 416 kbps bereitstellt,

wobei eine Verzögerung = 8 ms in dem ADSL2-konformen System mit einem von *INP_min* = 0, 1/2, 1, 2, 4 und 8 DMT-Symbolen maximale Abwärtsrichtung-Nettodatenraten von 16256, 15744, 15232, 7104, 3008 bzw. 960 kbps bereitstellt,

wobei eine Verzögerung = 16 ms in dem ADSL2-konformen System mit einem von *INP_min* = 0, 1/2, 1, 2, 4, 8 und 16 DMT-Symbolen maximale Abwärtsrichtung-Nettodatenraten von 8064, 7936, 7808, 7552, 3520, 1472 bzw. 448 kbps bereitstellt, und

wobei eine Verzögerung = 32 ms in dem ADSL2-konformen System mit einem von *INP_min* = 0, 1/2, 1, 2, 4, 8 und 16 DMT-Symbolen maximale Abwärtsrichtung-Nettodatenraten von 3968, 3968, 3904, 3840, 3712, 1728 bzw. 704 kbps bereitstellt;

Einstellen der minimalen Verzögerung gleich der maximalen Verzögerung; und

Auswählen, dass eine minimale Nettodatenrate für Abwärtsrichtung kleiner ist als eine bestimmte maximale Abwärtsrichtung-Nettodatenrate, die mit einer ausgewählten Verzögerung und einem ausgewählten einen von *INP_min*-Werten korrespondiert.

4. Verfahren zum Konfigurieren eines ADSL-Transceivers zum Operieren gemäß für ein mit Asymmetrie Digital Subscriber Line Version 2+ - ADSL2+ - konformes System ausgewählten Parametern, das Verfahren umfassend:

Auswählen einer Verzögerung von einem von 1,33, 2,67 und 5,33 ms;

wobei Auswählen einer Verzögerung = 1,33 ms in dem ADSL2+-konformen System mit einem ausgewählten minimalen Rauschschutz - INP_min - = 0, 1/2, 1 und 2 diskreten Mehrton- bzw. DMT-Symbolen maximale Abwärtsrichtung-Nettodatenraten von 24416, 6560, 2432 bzw. 416 kbps produziert,
wobei Auswählen einer Verzögerung = 2,67 ms in dem ADSL2+-konformen System mit ausgewählten einen von *INP_min* = 0, 1/2, 1, 2 und 4 DMT-Symbolen maximale Abwärtsrichtung-Nettodatenraten von 24416, 14720, 6560, 2432 bzw. 416 produziert,
wobei eine Verzögerung = 5,33 ms in dem ADSL2+ - konformen System mit einem von *INP_min* = 0, 1/2, 1, 2, 4 und 8 DMT-Symbolen maximale Abwärtsrichtung-Nettodatenraten von 24416, 23264, 14720, 6560, 2432 bzw. 416 kbps bereitstellt;
Einstellen der minimalen Verzögerung gleich der maximalen Verzögerung; und

Auswählen, dass eine minimale Nettodatenrate für Abwärtsrichtung kleiner ist als eine bestimmte maximale Abwärtsrichtung-Nettodatenrate, die mit einer ausgewählten Verzögerung und einem ausgewählten einen von *INP_min*-Werten korrespondiert.

5. Verfahren zum Konfigurieren eines ADSL-Transceivers zum Operieren gemäß für ein mit Asymmetrie Digital Subscriber Line Version 2+ - ADSL2+ - konformes System ausgewählten Parametern, das Verfahren umfassend:

Auswählen einer Verzögerung von einem von 1, 2, 4, 8, 16 und 32 ms;

wobei Auswählen einer Verzögerung = 1 ms in dem ADSL2+-konformen System mit einem ausgewählten minimalen Rauschschutz - INP_min - = 0 diskreten Mehrton- bzw. DMT-Symbolen eine maximale Aufwärtsrichtung-Nettodatenrate von 3520 kbps produziert,
wobei Auswählen einer Verzögerung = 2 ms in dem ADSL2+-konformen System mit einem ausgewählten einen von *INP_min* = 0, 1/2, 1 und 2 DMT-Symbolen maximale Aufwärtsrichtung-Nettodatenraten von 3520, 3072, 1472 bzw. 448 produziert,
wobei eine Verzögerung = 4 ms in dem ADSL2+-konformen System mit einem von *INP_min* = 0, 1/2, 1, 2 und 4 DMT-Symbolen maximale Aufwärtsrichtung-Nettodatenraten von 3520, 3264, 1728, 704 bzw. 192 kbps bereitstellt,
wobei eine Verzögerung = 8 ms in dem ADSL2+-konformen System mit einem von *INP_min* = 0, 1/2, 1, 2, 4 und 8 DMT-Symbolen maximale Aufwärtsrichtung-Nettodatenraten von 1920, 1856, 1792, 832, 320 bzw. 64 kbps bereitstellt,
wobei eine Verzögerung = 16 ms in dem ADSL2+-konformen System mit einem von *INP_min* = 0, 1/2, 1, 2, 4, 8 und 16 DMT-Symbolen maximale Aufwärtsrichtung-Nettodatenraten von 896, 896, 896, 832, 384 bzw. 128 kbps bereitstellt, und
wobei eine Verzögerung = 32 ms in dem ADSL2+-konformen System mit einem von *INP_min* = 0, 1/2, 1, 2, 4, 8 und 16 DMT-Symbolen maximale Aufwärtsrichtung-Nettodatenraten von 416, 416, 416, 416, 384, 160 bzw. 32 kbps bereitstellt;

Einstellen der minimalen Verzögerung gleich der maximalen Verzögerung; und
Auswählen, dass eine minimale Nettodatenrate für Abwärtsrichtung kleiner ist als eine bestimmte maximale Aufwärtsrichtung-Nettodatenrate, die mit einer ausgewählten Verzögerung und einem ausgewählten einen von *INP_min*-Werten korrespondiert.

## Revendications

1. Procédé pour configurer le fonctionnement d'un émetteur/récepteur ADSL selon des paramètres sélectionnés pour un système conforme à la ligne d'abonné numérique asymétrique version 2, ADSL2, le procédé comprenant les étapes consistant à :

sélectionner un retard parmi les valeurs 1, 2, 4, 8, 16 et 32 ms ;
dans lequel procédé la sélection d'un retard = 1 ms dans le système conforme ADSL2 ayant une protection minimum contre le bruit INP_min sélectionnée = 0 symbole de multitonalité discrète, DMT, produit un débit de données net aval maximum de 14 656 kbps,

la sélection d'un retard = 2 ms dans le système conforme ADSL2 ayant l'une des valeurs *INP_min* sélectionnée = 0, 1/2, 1 ou 2 symboles DMT produit des débits de données nets aval maximum de 14 656, 7104, 3008 et 960 kbps, respectivement,

un retard = 4 ms dans le système conforme ADSL2 ayant l'une des valeurs *INP_min* = 0, 1/2, 1, 2 ou 4 symboles DMT produit des débits de données nets aval maximum de 14 656, 13 632, 7104, 3008 et 960 kbps, respectivement,

un retard = 8 ms dans le système conforme ADSL2 ayant l'une des valeurs *INP_min* = 0, 1/2, 1, 2, 4 ou 8 symboles DMT produit des débits de données nets aval maximum de 14 656, 13 632, 13 632, 7104, 3008 et 960 kbps, respectivement,

un retard = 16 ms dans le système conforme ADSL2 ayant l'une des valeurs *INP_min* = 0, 1/2, 1, 2, 4, 8 ou 16 symboles DMT produit des débits de données nets aval maximum de 8064, 7552, 7552, 7552, 3502, 1472 et 448 kbps, respectivement, et

un retard = 32 ms dans le système conforme ADSL2 ayant l'une des valeurs *INP_min* = 0, 1/2, 1, 2, 4, 8 ou 16 symboles DMT produit des débits de données nets aval maximum de 3968, 3712, 3712, 3712, 3712, 1728 et 704 kbps, respectivement ;

fixer le retard minimum à une valeur égale au retard maximum ; et

sélectionner un débit de données net minimum pour l'aval qui soit inférieur à un débit de données net aval maximum particulier qui correspond à un retard sélectionné et à une des valeurs *INP_min* qui a été sélectionnée.

**2.** Procédé pour configurer le fonctionnement d'un émetteur/récepteur ADSL selon des paramètres sélectionnés pour un système conforme à la ligne d'abonné numérique asymétrique version 2, ADSL2, le procédé comprenant les étapes consistant à :

sélectionner un retard parmi les valeurs 1, 2, 4, 8, 16 et 32 ms ;

dans lequel procédé la sélection d'un retard = 1 ms dans le système conforme ADSL2 ayant une protection minimum contre le bruit INP_min sélectionnée = 0 symbole de multitonalité discrète, DMT, produit un débit de données net amont maximum de 3520 kbps,

la sélection d'un retard = 2 ms dans le système conforme ADSL2 ayant l'une des valeurs *INP_min* sélectionnée = 0, 1/2, 1 ou 2 symboles DMT produit des débits de données nets amont maximum de 3520, 3072, 1472 et 448, respectivement,

un retard = 4 ms dans le système conforme ADSL2 ayant l'une des valeurs *INP_min* = 0, 1/2, 1, 2 ou 4 symboles DMT produit des débits de données nets amont maximum de 3520, 3264, 1728, 704 et 192 kbps, respectivement,

un retard = 8 ms dans le système conforme ADSL2 ayant l'une des valeurs *INP_min* = 0, 1/2, 1, 2, 4 ou 8 symboles DMT produit des débits de données nets amont maximum de 1920, 1856, 1792, 832, 320 et 64 kbps, respectivement,

un retard = 16 ms dans le système conforme ADSL2 ayant l'une des valeurs *INP_min* = 0, 1/2, 1, 2, 4 ou 16 symboles DMT produit des débits de données nets amont maximum de 896, 896, 896, 832, 384 et 128 kbps, respectivement, et

un retard = 32 ms dans le système conforme ADSL2 ayant l'une des valeurs *INP_min* = 0, 1/2, 1, 2, 4 ou 16 symboles DMT produit des débits de données nets amont maximum de 416, 416, 416, 416, 384, 160 et 32 kbps, respectivement ;

fixer le retard minimum à une valeur égale au retard maximum ; et

sélectionner un débit de données net minimum pour l'aval qui soit inférieur à un débit de données net amont maximum particulier qui correspond à un retard sélectionné et à une des valeurs *INP_min* qui a été sélectionnée.

**3.** Procédé pour configurer le fonctionnement d'un émetteur/récepteur ADSL selon des paramètres sélectionnés pour un système conforme à la ligne d'abonné numérique asymétrique version 2+, ADSL2+, le procédé comprenant les étapes consistant à :

sélectionner un retard parmi les valeurs 1, 2, 4, 8, 16 et 32 ms ;

dans lequel procédé la sélection d'un retard = 1 ms dans le système conforme ADSL2+ ayant une protection minimum contre le bruit INP_min sélectionnée = 0 symbole de multitonalité discrète, DMT, produit un débit de données net aval maximum de 24 416 kbps,

la sélection d'un retard = 2 ms dans le système conforme ADSL2+ ayant l'une des valeurs *INP_min* sélectionnée = 0, 1/2, 1 ou 2 symboles DMT produit des débits de données nets aval maximum de 16 256, 7104, 3008 et 960 kbps, respectivement,

un retard = 4 ms dans le système conforme ADSL2+ ayant l'une des valeurs *INP_min* = 0, 1/2, 1, 2, 4 ou 8 symboles DMT produit des débits de données nets aval maximum de 16 256, 15 232, 7104, 3008, 960 et 416 kbps, respectivement,

un retard = 8 ms dans le système conforme ADSL2 ayant l'une des valeurs *INP_min* = 0, 1/2, 1, 2, 4 ou 8 symboles DMT produit des débits de données nets aval maximum de 16 256, 15 744, 15 232, 7104, 3008 et 960 kbps, respectivement,

un retard = 16 ms dans le système conforme ADSL2 ayant l'une des valeurs *INP_min* = 0, 1/2, 1, 2, 4, 8 ou 16 symboles DMT produit des débits de données nets aval maximum de 8064, 7936, 7808, 7552, 3520, 1472 et 448 kbps, respectivement, et

un retard = 32 ms dans le système conforme ADSL2 ayant l'une des valeurs *INP_min* = 0, 1/2, 1, 2, 4, 8 ou 16 symboles DMT produit des débits de données nets aval maximum de 3968, 3968, 3904, 3840, 3712, 1728 et 704 kbps, respectivement ;

fixer le retard minimum à une valeur égale au retard maximum ; et

sélectionner un débit de données net minimum pour l'aval qui soit inférieur à un débit de données net aval maximum particulier qui correspond à un retard sélectionné et à une des valeurs *INP_min* qui a été sélectionnée.

4. Procédé pour configurer le fonctionnement d'un émetteur/récepteur ADSL selon des paramètres sélectionnés pour un système conforme à la ligne d'abonné numérique asymétrique version 2+, ADSL2+, le procédé comprenant les étapes consistant à :

sélectionner un retard parmi les valeurs 1,33, 2,67 et 5,33 ms ;

dans lequel procédé la sélection d'un retard = 1,33 ms dans le système conforme ADSL2+ ayant une protection minimum contre le bruit INP_min sélectionnée = 0, 1/2, 1 ou 2 symboles de multitonalité discrète, DMT, produit des débits de données nets aval maximum de 24 416, 6560, 2432 et 416 kbps, respectivement,

la sélection d'un retard = 2,67 ms dans le système conforme ADSL2+ ayant l'une des valeurs *INP_min* sélectionnée = 0, 1/2, 1, 2 ou 4 symboles DMT produit des débits de données nets aval maximum de 24 416, 14 720, 6560, 2432 et 416, respectivement,

un retard = 5,33 ms dans le système conforme ADSL2+ ayant l'une des valeurs *INP_min* = 0, 1/2, 1, 2, 4 ou 8 symboles DMT produit des débits de données nets aval maximum de 24 416, 23 264, 14 720, 6560, 2432 et 416 kbps, respectivement ;

fixer le retard minimum à une valeur égale au retard maximum ; et

sélectionner un débit de données net minimum pour l'aval qui soit inférieur à un débit de données net aval maximum particulier qui correspond à un retard sélectionné et à une des valeurs *INP_min* qui a été sélectionnée.

5. Procédé pour configurer le fonctionnement d'un émetteur/récepteur ADSL selon des paramètres sélectionnés pour un système conforme à la ligne d'abonné numérique asymétrique version 2+, ADSL2+, le procédé comprenant les étapes consistant à :

sélectionner un retard parmi les valeurs 1, 2, 4, 8, 16 et 32 ms ;

dans lequel procédé la sélection d'un retard = 1 ms dans le système conforme ADSL2+ ayant une protection minimum contre le bruit INP_min sélectionnée = 0 symbole de multitonalité discrète, DMT, produit un débit de données net amont maximum de 3520 kbps,

la sélection d'un retard = 2 ms dans le système conforme ADSL2+ ayant l'une des valeurs *INP_min* sélectionnée = 0, 1/2, 1 ou 2 symboles DMT produit des débits de données nets amont maximum de 3520, 3072, 1472 et 448, respectivement,

un retard = 4 ms dans le système conforme ADSL2+ ayant l'une des valeurs *INP_min* = 0, 1/2, 1, 2 ou 4 symboles DMT produit des débits de données nets amont maximum de 3520, 3264, 1728, 704 et 192 kbps, respectivement,

un retard = 8 ms dans le système conforme ADSL2+ ayant l'une des valeurs *INP_min* = 0, 1/2, 1, 2, 4 ou 8 symboles DMT produit des débits de données nets amont maximum de 1920, 1856, 1792, 832, 320 et 64 kbps, respectivement,

un retard = 16 ms dans le système conforme ADSL2+ ayant l'une des valeurs *INP_min* = 0, 1/2, 1, 2, 4, 8 ou 16 symboles DMT produit des débits de données nets amont maximum de 896, 896, 896, 832, 384 et 128 kbps, respectivement, et

un retard = 32 ms dans le système conforme ADSL2+ ayant l'une des valeurs *INP_min* = 0, 1/2, 1, 2, 4, 8 ou 16 symboles DMT produit des débits de données nets amont maximum 416, 416, 416, 416, 384, 160 et 32 kbps, respectivement ;

fixer le retard minimum à une valeur égale au retard maximum ; et

sélectionner un débit de données net minimum pour l'aval qui soit inférieur à un débit de données net amont maximum particulier qui correspond à un retard sélectionné et à une des valeurs *INP_min* qui a été sélectionnée.